# EUROPEAN PATENT APPLICATION

(11) **EP 4 664 427 A1**
(43) Date of publication of application: **17.12.2025**
(21) Application number: 24788100.6
(22) Date of filing: 10.04.2024
(51) Int. Cl.: G06V 40/10

(54) **VIDEO PERSON RE-IDENTIFICATION METHOD AND SYSTEM AND RELATED DEVICE**

(30) Priority: 11.04.2023 CN 202310402452
(71) Applicant: Zhejiang Uniview Technologies Co., Ltd., Hangzhou, Zhejiang 310051 (CN)
(72) Inventor: WANG, Kang, Hangzhou, Zhejiang 310051 (CN); YOU, Weifeng, Hangzhou, Zhejiang 310051 (CN); YANG, Aisheng, Hangzhou, Zhejiang 310051 (CN); LIN, Kaidong, Hangzhou, Zhejiang 310051 (CN)
(74) Representative: HGF
(86) International application number: PCT/CN2024/086999
(87) International publication number: WO 2024/212998

(57) **Abstract**

Provided is a video person re-identification method. The method includes acquiring (S101) a to-be-detected video containing a target person, and identifying different pose images of the target person in the to-be-detected video; determining (S102) the image quality of each pose image, and determining at least one optimal pose image with the highest image quality for each pose; separately performing (S103) feature extraction and human contour feature extraction on the at least one optimal pose image in temporal order to obtain an appearance feature and a human contour feature of the target person under the same pose; performing (S104) fusion on appearance features and human contour features under different poses in a channel dimension to obtain a fused feature of the target person; and performing (S105) similarity calculation based on the fused feature and a person feature of the target person, and identifying the target person according to calculation results ranked from high to low in similarity.

## Description

This application claims priority to Chinese Patent Application No. 202310402452.1 filed with the China National Intellectual Property Administration (CNIPA) on Apr. 11, 2023, the disclosure of which is incorporated herein by reference in its entirety.

### TECHNICAL FIELD

This application relates to the field of image recognition, for example, to a video person re-identification method, a video person re-identification system, and a related device.

### BACKGROUND

In the existing video person identification process, factors such as a person changing clothes midway or significant changes in human appearance features due to lighting conditions often lead to a substantial decrease in retrieval accuracy of video person re-identification, which severely affects the effectiveness of video person re-identification.

In one person re-identification solution, classification is performed based on different shooting angles, and in each category, a specified number of video frames with unoccluded detection boxes and the largest area are selected as to-be-processed video frames. A multi-angle image part feature matrix of a to-be-identified person is established, and the same region features of the to-be-processed video frames from different angles are fused. The matching value between a target feature matrix and a to-be-identified feature matrix is calculated to complete person re-identification. However, this solution only utilizes the same human body region, and in the case where there are significant differences in appearance information, such as a person changing clothes, the retrieval accuracy of person re-identification across multiple angles significantly decreases, making it difficult to re-identify the person target across multiple angles after a clothing change.

### SUMMARY

This application provides a video person re-identification method, a video person re-identification system, a computer-readable storage medium, and an electronic device. Feature fusion is performed on cross-domain joint features obtained through bitwise multiplication of appearance features of a person in different poses and human contour features of corresponding postures, and re-identification is performed based on the fused feature. In this manner, the accuracy of person re-identification can be significantly improved.

This application provides a video person re-identification method. The method includes acquiring a to-be-detected video containing a target person, and identifying different pose images of the target person in the to-be-detected video; determining the image quality of each pose image, and determining at least one optimal pose image with the highest image quality for each pose; separately performing feature extraction and human contour feature extraction on the at least one optimal pose image in temporal order to obtain an appearance feature and a human contour feature of the target person under the same pose; performing bitwise fusion of appearance features and human contour features under different poses in a channel dimension to obtain a fused feature of the target person; and performing similarity calculation based on the fused feature and a person feature of the target person, and identifying the target person according to calculation results ranked from high to low in similarity.

This application also provides a video person re-identification system. The system includes an acquisition module, an image quality calculation module, a feature extraction module, a feature fusion module, and a feature comparison module. The acquisition module is configured to acquire a to-be-detected video containing a target person and identify different pose images of the target person in the to-be-detected video. The image quality calculation module is configured to determine the image quality of each pose image and determine at least one optimal pose image with the highest image quality for each pose. The feature extraction module is configured to separately perform feature extraction and human contour feature extraction on the at least one optimal pose image in temporal order to obtain an appearance feature and a human contour feature of the target person under the same pose. The feature fusion module is configured to perform bitwise fusion of appearance features and human contour features under different poses in a channel dimension to obtain a fused feature of the target person. The feature comparison module is configured to perform similarity calculation based on the fused feature and a person feature of the target person and identify the target person according to calculation results ranked from high to low in similarity.

This application also provides a computer-readable storage medium storing a computer program that, when executed by a processor, implements the method described above.

This application also provides an electronic device. The electronic device includes a memory and a processor. The memory stores a computer program. The processor, when executing the computer program in the memory, implements the method described above.

### BRIEF DESCRIPTION OF DRAWINGS

FIG. 1 is a flowchart of a video person re-identification method according to an embodiment of this application.
FIG. 2 is a diagram illustrating the process of a human contour feature extraction module according to an embodiment of this application.
FIG. 3 is a diagram illustrating the structure of a video person re-identification system according to an embodiment of this application.

### DETAILED DESCRIPTION

The technical solutions in embodiments of this application are described below in conjunction with the drawings in the embodiments of this application. Apparently, the embodiments described below are part of the embodiments of this application. Based on the embodiments of this application, all other embodiments obtained by those of ordinary skill in the art without creative work are within the scope of this application.

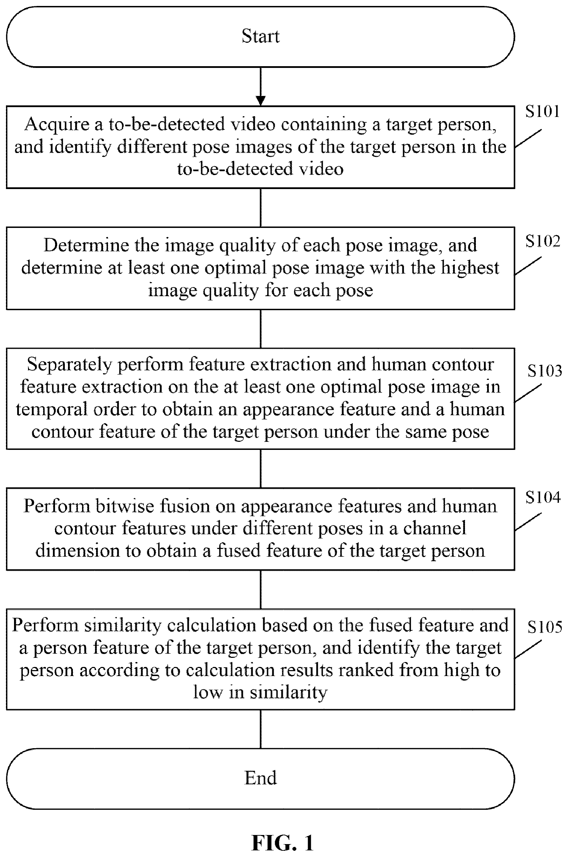

With reference to FIG. 1, FIG. 1 is a flowchart of a video person re-identification method according to an embodiment of this application. The method includes S101 to S105.

In S101, a to-be-detected video containing a target person is acquired, and different pose images of the target person in the to-be-detected video are identified.

This step aims to acquire the to-be-detected video and identify different pose images of the target person. No limitation is imposed on how to acquire the to-be-detected video. The to-be-detected video may originate from a video capture device, such as a video stream captured by a camera.

Thereafter, it is necessary to detect and track the target person in the to-be-detected video. The target person refers to any person requiring identification; that is, the target person may be a pre-specified detection target or a person present in the to-be-detected video. At least one or multiple target persons may exist.

No limitation is imposed on how to identify different pose images of the target person in the to-be-detected video. A pose classification model may be used for pose detection.

One feasible method for identifying different pose images of the target person during the to-be-detected video includes the following: In the first step, the position and type of a target in the to-be-detected video are determined using a target detection algorithm. In the second step, a detection box is determined using the target detection algorithm, and a tracking box is predicted using a tracking algorithm. In the third step, poses of the extracted target are classified using a pose classification model to obtain different pose images of the target person.

The target detection algorithm and the tracking algorithm are used to acquire corresponding images from the video, while the pose classification model is used to classify the poses of the acquired images. The target detection algorithm may employ algorithms such as You Only Look Once (YOLO) to determine the types and positions of multiple targets in the to-be-detected video. It should be noted that the target may be any target in the to-be-detected video, including persons and objects, and the focus is on the person targets after the target type is determined. Starting from the first frame of the to-be-detected video, the detection box is converted into the tracking box. In other words, the detection box and the tracking box are consistent in the first frame, and the tracking box is predicted in subsequent frames. In the subsequent frames, the human body targets in the tracking box are classified according to their poses. No limitation is imposed on the types of poses included in the pose classification model. The types may include front, side, and back poses, or pose samples may be further refined into more categories as needed. It is readily understood that the richer the pose types, the higher the detection accuracy.

The detection box is typically determined by a detection model, while the tracking box may be predicted by a tracking algorithm. The tracking box may represent the trajectory of the same target throughout the video. No limitation is imposed on which detection model or tracking algorithm is used. The purpose of detection and tracking is to acquire images of the same target at different moments in the video.

Additionally, to ensure the accuracy of tracking the person target in the process of applying the tracking box, the Kalman algorithm may be used to predict the tracking box, and the Hungarian algorithm may be used to match and correct the tracking box. The Hungarian algorithm may be applied to optimize the tracking of multiple target tracking boxes by finding the maximum matching in a bipartite graph.

In S102, the image quality of each pose image is determined, and at least one optimal pose image with the highest image quality is determined for each pose.

This step aims to determine the image quality of pose images by selecting the optimal pose image with the highest image quality for feature extraction to improve the accuracy of the extracted features. It should also be noted that the optimal pose image corresponds to each pose category, that is, each pose corresponds to at least one optimal pose image. The optimal pose image may be one or several images with higher image quality under a given pose.

In one feasible implementation of this step, the image quality may be determined by the determination of a type score and a position score. The type score and position score of each pose image may be calculated, and the quality score is determined based on the product of the type score and the position score, where the quality score is used to characterize the image quality of the pose image.

The type score may be determined based on the similarity between the type of a detected target in the first frame and the type of a tracked target during tracking. The type score is used to evaluate the accuracy of detection and tracking and may be obtained by calculating the similarity between the type of the target in the first frame and the type of the tracked target during tracking (which may be set to include 25 frames). The similarity is obtained through a feature extraction model for different pose types. If the similarity is less than 0.7, the type score is set to 0; if the similarity is greater than 0.7, the type score is set to 1.

The position score is used to evaluate the actual quality of image capture during detection and tracking and may be determined based on the ratio of the intersection-over-union of the tracking box and the detection box to the distance from the center point of the tracking box to the center point of the detection box. That is, the larger the tracking box area closer to the center of the detection box, the higher the position score.

Thereafter, the image quality may be determined based on the product of the position score and the type score.

Of course, those skilled in the art may also use other methods to evaluate image quality, which are not exhaustively listed here but should fall within the scope of this application.

In S103, feature extraction and human contour feature extraction are separately performed on the at least one optimal pose image in temporal order to obtain an appearance feature and a human contour feature of the target person under the same pose.

This step aims to perform feature extraction, and the extracted features include the appearance feature and the human contour feature. The appearance feature refers to the external characteristics of the target person but is susceptible to factors such as clothing changes. The human contour feature is less affected by factors such as clothing changes.

When this step is implemented, a feature extraction module and a human contour feature extraction module may be used to obtain the appearance feature and the human contour feature, respectively.

The optimal pose images may be input in temporal order into the human contour feature extraction module to obtain the human contour feature.

The human contour feature extraction module is configured to upsample the optimal pose images, obtain a binarized human contour map through dimensionality reduction and an activation function, and process the binarized human contour map and the optimal pose images sequentially through a convolutional layer and a pooling layer to obtain the human contour feature. Upsampling refers to image upsampling and is used to enlarge images through interpolation.

Meanwhile, the optimal pose images may be input in temporal order into the feature extraction model with a residual network as the backbone to obtain the appearance feature.

It should be noted that the processes of extracting the appearance feature and the human contour feature are independent and do not interfere with each other. That is, no specific limitation is imposed on the execution order of the two processes. In practical applications, the two processes may be executed synchronously to improve the recognition efficiency of this embodiment.

In S104, bitwise fusion is performed on appearance features and human contour features under different poses in a channel dimension to obtain a fused feature of the target person.

This step requires performing feature fusion between appearance features and human contour features. Since the dimensions of the appearance feature and the human contour feature are the same, fusion may be performed in the channel dimension, either through bitwise multiplication or bitwise addition. The fusion method may be set by those skilled in the art based on actual recognition accuracy and other requirements. The resulting fused feature not only focuses on appearance information but also incorporates contour features that are less affected by appearance changes. This significantly improves the retrieval accuracy in the case of clothing changes in video person re-identification.

It should be noted that the fused feature obtained in this step corresponds to multiple pose categories.

In S105, similarity calculation is performed based on the fused feature and a person feature of the target person, and the target person is identified according to calculation results ranked from high to low in similarity.

This step requires performing person re-identification based on the fused feature. A similarity calculation with the person feature of the target person is performed, such as calculating the cosine distance or Euclidean distance between features to obtain the feature similarity, and the results are ranked from high to low based on similarity to determine the likely target, thereby completing person re-identification. The person feature is the known feature of the person. For example, if a specific target person needs to be detected in the to-be-detected video, the fused features of multiple person targets in the to-be-detected video may be compared with the known person feature of the target person to obtain similarities between the multiple person targets and the target person, thereby determining which targets are likely to be the target person.

As an implementation, the appearance feature and the human contour feature under the same pose may first be fused through bitwise multiplication in the channel dimension to obtain a joint feature of the target person under the same pose. Then, joint features of the target person under different poses are fused through bitwise multiplication in the channel dimension to obtain the fused feature of the target person. Each pose has a corresponding joint feature used to represent feature information of the target person under the pose. The fused feature integrates all joint features of the target person under different poses. It is evident that the fused feature includes not only the appearance features of multiple poses but also the human contour features corresponding to multiple poses. Performing person re-identification using the fused feature can effectively filter out misclassifications due to clothing changes in subsequent feature comparisons and improve the retrieval accuracy of person re-identification.

In the embodiments of this application, after the to-be-detected video is acquired, different pose images of the target person are identified, and the optimal pose images with the highest image quality are selected for appearance feature and human contour feature extraction. The appearance features and human contour features are then fused to obtain a fused feature that includes features of multiple poses and corresponding human contour features. The fused feature contains both the appearance information of poses of the person from different angles and the human contour information under corresponding poses. These features exhibit good robustness in both the red, green, blue (RGB) color domain corresponding to human features and the black-and-white binary domain corresponding to human contour features. By using the fused feature for subsequent feature comparison and retrieval, the accuracy of person re-identification after pose changes or clothing changes can be significantly improved.

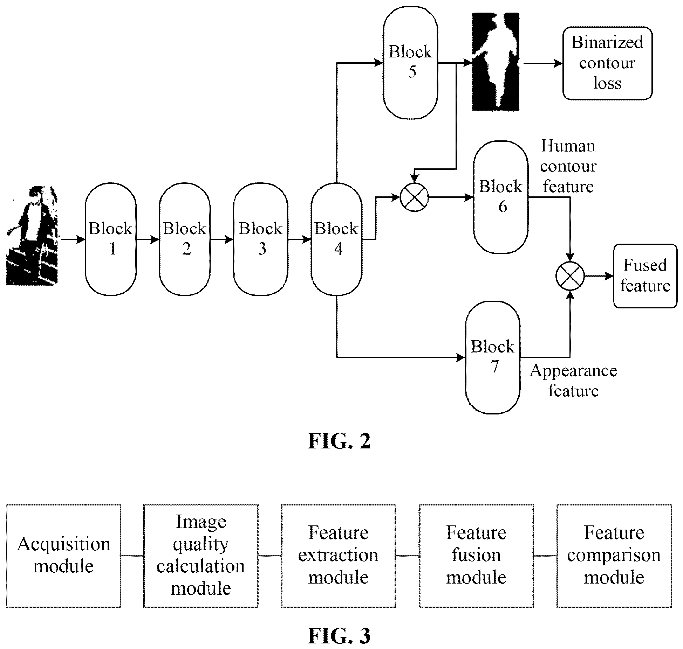

With reference to FIG. 2, FIG. 2 is a diagram illustrating the process of a human contour feature extraction module according to an embodiment of this application. In FIG. 2, Blocks 1-4 in the diagram illustrating the process of a human contour feature extraction module represent the convolutional layers (conv stage) of a deep residual network (ResNet) model, that is, the feature extraction process through convolutional downsampling. The purpose of Block 5 is to obtain a binarized human contour map. The structure of Block 5 may include convolution, an activation function (sigmoid), and pooling. The converted binarized human contour map is multiplied bitwise with shallow human features extracted by Blocks 1-4 and then processed through convolution in Block 6 to obtain the final human contour features. Block 6 is primarily used to adjust the feature dimension. Block 7 is also a conv stage of the ResNet network model, consistent with Blocks 1-4. This branch performs deep feature extraction on the input image to obtain appearance features. The deep appearance features are multiplied bitwise with the contour features output by Block 6 to obtain a fused feature of appearance features and contour features. Shallow features are richer in texture and edges, while deep features represent the semantic features of the image.

A video person re-identification system provided by an embodiment of this application is described below. The video person re-identification system described below and the video person re-identification method described above may be referenced correspondingly.

With reference to FIG. 2, this application also provides a video person re-identification system. The system includes an acquisition module, an image quality calculation module, a feature extraction module, a feature fusion module, and a feature comparison module. The acquisition module is configured to acquire a to-be-detected video containing a target person and identify different pose images of the target person in the to-be-detected video. The image quality calculation module is configured to determine the image quality of each pose image and determine at least one optimal pose image with the highest image quality for each pose. The feature extraction module is configured to separately perform feature extraction and human contour feature extraction on the at least one optimal pose image in temporal order to obtain an appearance feature and a human contour feature of the target person under the same pose. The feature fusion module is configured to perform bitwise fusion on appearance features and human contour features under different poses in a channel dimension to obtain a fused feature of the target person. The feature comparison module is configured to perform similarity calculation based on the fused feature and a person feature of the target person and identify the target person according to calculation results ranked from high to low in similarity.

Based on the preceding embodiments, as an optional embodiment, the acquisition module includes a pose recognition unit. The pose recognition unit is configured to determine a detection box corresponding to a target in the to-be-detected video using a target detection algorithm and determine a tracking box corresponding to the target in the to-be-detected video using a tracking algorithm; and classify poses of a human target in the tracking box using a pose classification model to obtain the different pose images of the target person.

Based on the preceding embodiments, as an optional embodiment, the image quality calculation module includes a score calculation unit and an image quality calculation unit. The score calculation unit is configured to calculate a type score of each pose image and a position score of each pose image. The image quality calculation unit is configured to determine a quality score based on the product of the type score and the position score. The quality score is used to characterize the image quality of each pose image.

Based on the preceding embodiments, as an optional embodiment, the score calculation unit includes a type score calculation subunit and a position score calculation subunit. The type score calculation subunit is configured to determine the type score based on the similarity between the type of a detected target in a first frame and the type of a tracked target during tracking. The position score calculation subunit is configured to determine the position score based on the ratio of the intersection-over-union of the tracking box and the detection box to the distance from the center point of the tracking box to the center point of the detection box.

Based on the preceding embodiments, as an optional embodiment, the feature extraction module includes a first extraction unit and a second extraction unit. The first extraction unit is configured to input the at least one optimal pose image in temporal order into a human contour feature extraction module to obtain the human contour feature, where the human contour feature extraction module is configured to upsample the at least one optimal pose image, obtain a binarized human contour map through dimensionality reduction and an activation function, and process the binarized human contour map and the at least one optimal pose image sequentially through a convolutional layer, a pooling layer, and an activation layer to obtain the human contour feature. The second extraction unit is configured to input the at least one optimal pose image in temporal order into a feature extraction network with a residual network as a backbone to obtain the appearance feature.

Based on the preceding embodiments, as an optional embodiment, the apparatus further includes a joint feature fusion module. The joint feature fusion module is configured to perform bitwise multiplication fusion on the appearance feature and the human contour feature under the same pose in the channel dimension to obtain a joint feature of the target person under the same pose.

Based on the preceding embodiments, as an optional embodiment, the feature fusion module is configured to perform bitwise multiplication on joint features of the target person under different poses in the channel dimension to obtain the fused feature of the target person.

This application also provides a computer-readable storage medium storing a computer program that, when executed, can implement the steps provided by the preceding embodiments. The storage medium may include various media capable of storing program code, such as a USB flash drive, a mobile hard disk, a read-only memory (ROM), a random access memory (RAM), a magnetic disk, or an optical disk.

This application also provides an electronic device. The electronic device may include a memory and a processor. The memory stores a computer program. The processor, when executing the computer program in the memory, can implement the steps provided by the preceding embodiments. Of course, the electronic device may also include various network interfaces, power supplies, and other components.

Multiple embodiments in this specification are described in a progressive manner. Each embodiment focuses on differences from other embodiments. The same or similar parts in the multiple embodiments can be referred mutually. For the system provided by the embodiments, since the system corresponds to the method provided by the embodiments, the description is relatively simple, and relevant details can be found in the method section.

The principles and embodiments of this application are illustrated herein using specific examples. The descriptions of the preceding embodiments are only intended to help understand the method and core ideas of this application. It should be noted that those of ordinary skill in the art may make several improvements and modifications to this application without departing from the principles of this application, and such improvements and modifications also fall within the scope of the claims of this application.

It is to be noted that in this specification, relationship terms such as first and second are used only to distinguish one entity or operation from another entity or operation and do not necessarily require or imply any such actual relationship or order between these entities or operations. Additionally, the term "comprising", "including", or any other variant thereof is intended to encompass a non-exclusive inclusion so that a process, method, article, or device that includes a series of elements not only includes the expressly listed elements but also includes other elements that are not expressly listed or elements inherent to such a process, method, article, or device. In the absence of more restrictions, the elements defined by the statement "including a ..." do not exclude the presence of additional identical elements in the process, method, article, or device that includes the elements.

## Claims

1. A video person re-identification method, comprising:
acquiring a to-be-detected video containing a target person, and identifying different pose images of the target person in the to-be-detected video;
determining an image quality of each pose image of the different pose images, and determining at least one optimal pose image with a highest image quality for each pose;
separately performing feature extraction and human contour feature extraction on the at least one optimal pose image in temporal order to obtain an appearance feature and a human contour feature of the target person under a same pose;
performing bitwise fusion on appearance features and human contour features under different poses in a channel dimension to obtain a fused feature of the target person; and
performing similarity calculation based on the fused feature and a person feature of the target person, and identifying the target person according to calculation results ranked from high to low in similarity.

2. The video person re-identification method according to claim 1, wherein identifying the different pose images of the target person in the to-be-detected video comprises:
determining, by using a target detection algorithm, a detection box corresponding to a target in the to-be-detected video and determining, by using a tracking algorithm, a tracking box corresponding to the target in the to-be-detected video, wherein the target is any target in the to-be-detected video and comprises a person; and
classifying poses of a human target in the tracking box using a pose classification model to obtain the different pose images of the target person.

3. The video person re-identification method according to claim 2, wherein determining the image quality of each pose image of the different pose images comprises:
calculating a type score of the each pose image and a position score of the each pose image; and
determining a quality score based on a product of the type score and the position score, wherein the quality score is used to characterize the image quality of the each pose image.

4. The video person re-identification method according to claim 3, wherein calculating the type score of the each pose image and the position score of the each pose image comprises:
determining the type score based on a similarity between a type of a detected target in a first frame and a type of a tracked target during tracking; and
determining the position score based on a ratio of an intersection-over-union of the tracking box and the detection box to a distance from a center point of the tracking box to a center point of the detection box.

5. The video person re-identification method according to claim 1, wherein separately performing the feature extraction and the human contour feature extraction on the at least one optimal pose image in temporal order to obtain the appearance feature and the human contour feature of the target person under the same pose comprises:
inputting the at least one optimal pose image in temporal order into a human contour feature extraction module to obtain the human contour feature, wherein the human contour feature extraction module is configured to upsample the at least one optimal pose image, obtain a binarized human contour map through dimensionality reduction and an activation function, and process the binarized human contour map and the at least one optimal pose image sequentially through a convolutional layer, a pooling layer, and an activation layer to obtain the human contour feature; and
inputting the at least one optimal pose image in temporal order into a feature extraction network with a residual network as a backbone to obtain the appearance feature.

6. The video person re-identification method according to claim 1, wherein after the appearance feature and the human contour feature of the target person under the same pose are obtained, the method further comprises:
performing bitwise multiplication fusion of the appearance feature and the human contour feature under the same pose in the channel dimension to obtain a joint feature of the target person under the same pose.

7. The video person re-identification method according to claim 6, wherein performing the bitwise fusion on the appearance features and the human contour features under the different poses in the channel dimension to obtain the fused feature of the target person comprises:
performing bitwise multiplication of joint features of the target person under the different poses in the channel dimension to obtain the fused feature of the target person.

8. A video person re-identification system, comprising:
an acquisition module configured to acquire a to-be-detected video containing a target person and identify different pose images of the target person in the to-be-detected video;
an image quality calculation module configured to determine an image quality of each pose image of the different pose images and determine at least one optimal pose image with a highest image quality for each pose;
a feature extraction module configured to separately perform feature extraction and human contour feature extraction on the at least one optimal pose image in temporal order to obtain an appearance feature and a human contour feature of the target person under a same pose;
a feature fusion module configured to perform bitwise fusion on appearance features and human contour features under different poses in a channel dimension to obtain a fused feature of the target person; and
a feature comparison module configured to perform similarity calculation based on the fused feature and a person feature of the target person and identify the target person according to calculation results ranked from high to low in similarity.

9. A computer-readable storage medium storing a computer program that, when executed by a processor, implements the video person re-identification method according to any one of claims 1 to 7.

10. An electronic device comprising a memory and a processor, wherein the memory stores a computer program, and the processor, when executing the computer program in the memory, implements the video person re-identification method according to any one of claims 1 to 7.
